# EUROPÄISCHE PATENTANMELDUNG

(11) **EP 4 008 166 A1**
(43) Veröffentlichungstag der Anmeldung: **08.06.2022**
(21) Anmeldenummer: 21199878.6
(22) Anmeldetag: 29.09.2021
(51) Int. Cl.: A01B 79/00

(54) **VERFAHREN ZUR STEUERUNG EINES CLOUDBASIERTEN LANDWIRTSCHAFTLICHEN DATENBANKSYSTEMS**

(30) Priorität: 04.12.2020 DE 102020132332
(71) Anmelder: 365FarmNet Group KGaA mbH & Co. KG, 33428 Harsewinkel (DE)
(72) Erfinder: von Löbbecke, Maximilian, 14129 Berlin (DE)
(74) Vertreter: CLAAS Gruppe

(57) **Zusammenfassung**

Die Erfindung betrifft ein Verfahren zur Steuerung eines cloudbasierten landwirtschaftlichen Datenbanksystems (1) mittels eines Steuerungssystems (2), wobei das Steuerungssystem (2) eine lokale Sprach-Eingabeeinheit (3) aufweist, wobei ein Benutzer (B) eine landwirtschaftliche Tätigkeit, insbesondere mit einer landwirtschaftlichen Arbeitsmaschine (4), in einer landwirtschaftlichen Umgebung durchführt, wobei die landwirtschaftliche Tätigkeit und der Benutzer (B) und die landwirtschaftliche Umgebung in einen landwirtschaftlichen Kontext eingebettet sind, wobei den landwirtschaftlichen Kontext abbildende Zustandsdaten und/oder Planungsdaten in dem landwirtschaftlichen Datenbanksystem (1) hinterlegt sind. Es wird vorgeschlagen, dass der Benutzer (B) während der Durchführung der landwirtschaftlichen Tätigkeit per Spracheingabe über die lokale Sprach-Eingabeeinheit (3) die Zustandsdaten und/oder Planungsdaten bearbeitet, insbesondere ergänzt.

## Beschreibung

Die Erfindung betrifft ein Verfahren zur Steuerung eines cloudbasierten landwirtschaftlichen Datenbanksystems mittels eines Steuerungssystems gemäß dem Oberbegriff von Anspruch 1, eine Sprach-Eingabeeinheit gemäß Anspruch 11, eine landwirtschaftliche Arbeitsmaschine gemäß Anspruch 12, ein Computerprogrammprodukt gemäß Anspruch 13, ein Steuerungssystem gemäß Anspruch 14 sowie ein landwirtschaftliches Datenbanksystem gemäß Anspruch 15.

Cloudbasierte Datenbanksysteme werden in der Landwirtschaft zunehmend eingesetzt. Sie dienen zur Sammlung und Zusammenführung von Daten unterschiedlichster Herkunft, beispielsweise Maschinendaten, Wetterdaten, Schlagdaten, Betriebsdaten, Planungsdaten und Zustandsdaten eines landwirtschaftlichen Betriebes. Diese Datenbanksysteme können Funktionen von der Maschinensteuerung bis hin zur Auftragsabrechnung übernehmen. Das Datenbanksystem bildet dabei üblicherweise einen landwirtschaftlichen Kontext wie einen landwirtschaftlichen Betrieb oder eine ähnliche wirtschaftliche Entität ab.

Vorliegend steht die Bearbeitung von Zustandsdaten und/oder Planungsdaten im Vordergrund. Diese kann die Planung oder Dokumentation von Arbeitsvorgängen, Abrechnungsvorgängen und dergleichen betreffen. Es handelt sich also ganz allgemein um Themen der Organisation eines landwirtschaftlichen Betriebes. Bisher werden diese Themen häufig mit hohem Zeit- und Personalaufwand von der restlichen landwirtschaftlichen Arbeit entkoppelt und insbesondere abends durchgeführt. Dieser Vorgang basiert zum Teil auf den Erinnerungen des Benutzers und ist generell wenig effizient.

Es ist grundsätzlich aus der DE 102 06 044 A1 bekannt, an Bordcomputern von landwirtschaftlichen Arbeitsmaschinen Spracheingaben zur Steuerung der landwirtschaftlichen Arbeitsmaschine zu tätigen. Ähnlich ist aus der DE 102 17 398 B4 auch bekannt, ein mobiles Endgerät zur Steuerung einer landwirtschaftlichen Arbeitsmaschine zu nutzen. Eine technische Unterstützung organisatorischer Vorgänge wird so jedoch nicht geboten.

Der Erfindung liegt das Problem zu Grunde, ein Verfahren anzugeben, das die Steuerung eines cloudbasierten landwirtschaftlichen Datenbanksystems mit höherer Integration in die landwirtschaftlichen Abläufe ermöglicht.

Das obige Problem wird bei einem Verfahren gemäß dem Oberbegriff von Anspruch 1 durch die Merkmale des kennzeichnenden Teils von Anspruch 1 gelöst.

Wesentlich ist die grundsätzliche Überlegung, dass die extensive Nutzung sowohl mobiler Endgeräte als auch eingebauter Bedienerterminals auf landwirtschaftlichen Arbeitsmaschinen zu hohen Ablenkungen führt, gleichzeitig jedoch viele landwirtschaftliche Tätigkeiten existieren, die einem Benutzer grundsätzlich die Freiheit lassen, zeitgleich diverse organisatorische Planungsschritte und dergleichen vorzunehmen. Durch das Zurverfügungstellen einer lokalen Sprach-Eingabeeinheit, die die Bearbeitung von Zustandsdaten und/oder Planungsdaten eines cloudbasierten landwirtschaftlichen Datenbanksystems ermöglicht, kann diese grundsätzlich vorhandene zeitliche Kapazität, die gleichzeitig insbesondere bei Dokumentationsvorgängen informativ nah am eigentlichen Vorgang liegt, gefahrlos genutzt werden. Es steht somit vorliegend die Erkenntnis im Vordergrund, dass während der Durchführung einer landwirtschaftlichen Tätigkeit durch Spracheingaben die Nutzung eines nicht direkt und unmittelbar die Steuerung landwirtschaftlicher Arbeitsmaschinen betreffenden Systems möglich ist.

So wird die Verlagerung organisatorischer Vorgänge in Zeitabschnitte ermöglicht, die eigentlich der Durchführung einer anderen landwirtschaftlichen Tätigkeit zugeordnet sind.

Im Einzelnen wird vorgeschlagen, dass der Benutzer während der Durchführung der landwirtschaftlichen Tätigkeit per Spracheingabe über die lokale Sprach-Eingabeeinheit die Zustandsdaten und/oder Planungsdaten bearbeitet, insbesondere ergänzt.

Bei einer Ausgestaltung gemäß Anspruch 2 kommt zur Übersetzung von als Spracheingabe eingesprochenen Sprachbefehlen ein Semantikmodell zum Einsatz. Dieses Semantikmodell wird auf Basis der Zustandsdaten und/oder Planungsdaten ausgewählt oder erzeugt. Es ist grundsätzlich ein Problem, menschliche Sprache für eine Maschine verständlich zu machen. Durch ein angepasstes Semantikmodell wird die Menge an möglichen Bedeutungen der Sprachbefehle deutlich reduziert, wodurch die Wahrscheinlichkeit einer korrekten Übersetzung der Steuerungsbefehle erhöht wird. Da außerdem gerade im landwirtschaftlichen Bereich auch die Qualität der Spracheingabe, insbesondere bezüglich Hintergrundgeräuschen und dergleichen, stark variieren kann, führt eine derartige Reduktion der möglichen Bedeutungen der Spracheingabe zu einem robusteren Verfahren.

Anspruch 3 betrifft die bevorzugte Anwendung des Verfahrens während der Durchführung einer landwirtschaftlichen Tätigkeit mittels einer landwirtschaftlichen Arbeitsmaschine. Diese Tätigkeit ist auf Grund einer guten Datenbasis zu Dokumentationszwecken, viel frei verwendbarer Zeit auch für Planungszwecke und einem für die Spracheingabe gut definierten Umfeld besonders interessant.

Die Ansprüche 4 und 5 geben bevorzugte Ausgestaltungen der Planungsdaten und der Zustandsdaten an. Hier wird deutlich, dass die Unterscheidung zwischen Planungs- und Steuerdaten zu einer Vereinfachung der ansonsten komplexen Steuerung führt.

Bei einer bevorzugten Ausgestaltung gemäß Anspruch 6 erhebt das Steuerungssystem automatisch die landwirtschaftliche Umgebung betreffende Messdaten und übernimmt diese als Zustandsdaten in das landwirtschaftliche Datenbanksystem. Dadurch wird der Benutzer von der manuellen Eingabe entlastet. Weiterhin ergibt sich so die Möglichkeit, das Semantikmodell auf Basis der Messdaten auszuwählen oder zu erzeugen und so die Sprachverarbeitung kontextabhängig zu verbessern.

Anspruch 7 basiert auf der grundsätzlichen Überlegung, dass die Menge an Bearbeitungen der Zustandsdaten und/oder Planungsdaten einerseits von vergangenen Bearbeitungen und andererseits von den Zustandsdaten und/oder Planungsdaten selbst und dabei konkret vom aktuellen Zustand des landwirtschaftlichen Kontextes oder der landwirtschaftlichen Umgebung selbst abhängt. Es wird so möglich, die voraussichtlichen oder sogar mögliche Bearbeitungen der Zustandsdaten und/oder Planungsdaten zu ermitteln und das Semantikmodell so auszuwählen oder zu erzeugen, dass der Spracheingabe nur eine sehr begrenzte Menge an möglichen Bedeutungen gegenübersteht. Entsprechend kann die Sprachverarbeitung sehr robust werden.

Eine weitere Möglichkeit, die Sprachverarbeitung und auch den Vorgang der Spracheingabe zu vereinfachen, ist die Vorgabe einer festen Struktur in Form von Formularen, die der Benutzer während der Durchführung der landwirtschaftlichen Tätigkeit bearbeitet. Diese Ausgestaltung ist Gegenstand von Anspruch 8.

Anspruch 9 betrifft bevorzugte Ausgestaltungen der für das Steuerungssystem zu verwendenden Hardware. Besonders erwähnenswert ist dabei die Möglichkeit, als Sprach-Eingabeeinheit ein Smartphone zu verwenden und als Ausgabeeinheit ein Terminal der landwirtschaftlichen Arbeitsmaschine. Dies trägt einerseits dem Umstand Rechnung, dass häufig Smartphones mit entsprechender Hard- und Software ausgestattet sind, deren Nutzung sehr effizient ist, andererseits eine Ausgabe auf dem Smartphone-Bildschirm selbst jedoch häufig während der Durchführung einer landwirtschaftlichen Tätigkeit sehr unpraktisch ist. Diese spezifische Kombination ermöglicht also eine effiziente Ausnutzung der vorhandenen Ressourcen und gleichzeitig eine Anpassung an die Nutzungsrealität des Benutzers.

Anspruch 10 betrifft eine Ausgestaltung, bei der das Steuerungssystem mittels der Ausgabeeinheit einen Dialog mit dem Benutzer durchführt. So wird es möglich, den Nutzer durch den Spracheingabeprozess zu leiten und gegebenenfalls Fehler oder Unklarheiten aufzuklären.

Nach einer weiteren Lehre gemäß Anspruch 11, der eigenständige Bedeutung zukommt, wird eine Sprach-Eingabeeinheit eingerichtet zur Verwendung in einem vorschlagsgemäßen Verfahren beansprucht. Auf alle Ausführungen zu dem vorschlagsgemäßen Verfahren darf verwiesen werden.

Nach einer weiteren Lehre gemäß Anspruch 12, der ebenfalls eigenständige Bedeutung zukommt, wird eine landwirtschaftliche Arbeitsmaschine mit einer Ausgabeeinheit eingerichtet zur Verwendung in dem vorschlagsgemäßen Verfahren beansprucht. Aus alle Ausführungen zu dem vorschlagsgemäßen Verfahren darf verwiesen werden.

Nach einer weiteren Lehre gemäß Anspruch 13, der ebenfalls eigenständige Bedeutung zukommt, wird ein Computerprogrammprodukt umfassend Steuerbefehle, die bei Ausführung durch ein Smartphone das Smartphone zur Verwendung als vorschlagsgemäße Sprach-Eingabeeinheit einrichten, beansprucht. Auf alle Ausführungen zu der vorschlagsgemäßen Sprach-Eingabeeinheit darf verwiesen werden.

Nach einer weiteren Lehre gemäß Anspruch 14, der ebenfalls eigenständige Bedeutung zukommt, wird ein Steuerungssystem zur Steuerung eines cloudbasierten landwirtschaftlichen Datenbanksystems eingerichtet zur Verwendung in einem vorschlagsgemäßen Verfahren beansprucht. Auf alle Ausführungen zu dem vorschlagsgemäßen Verfahren darf verwiesen werden.

Nach einer weiteren Lehre gemäß Anspruch 15, der ebenfalls eigenständige Bedeutung zukommt, wird ein landwirtschaftliches Datenbanksystem eingerichtet zur Verwendung in einem vorschlagsgemäßen Verfahren beansprucht. Auf alle Ausführungen zu dem vorschlagsgemäßen Verfahren darf verwiesen werden.

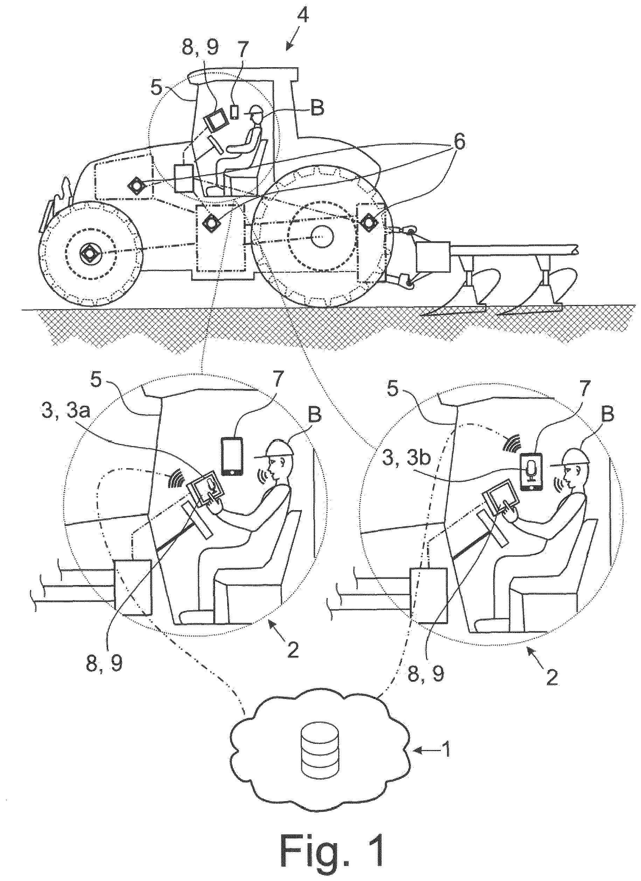

Im Folgenden wird die Erfindung anhand einer lediglich Ausführungsbeispiele darstellenden Zeichnung näher erläutert. In der Zeichnung zeigt
- Fig. 1: schematisch die Ausführung des vorschlagsgemäßen Verfahrens bei der Durchführung einer landwirtschaftlichen Tätigkeit mit einer landwirtschaftlichen Arbeitsmaschine.

Das in Rede stehende Verfahren dient zur Steuerung eines cloudbasierten landwirtschaftlichen Datenbanksystems 1 mittels eines Steuerungssystems 2. Das landwirtschaftliche Datenbanksystem 1 läuft dabei, wie in Fig. 1 angedeutet, hier und vorzugsweise nur in der Cloud. Das Steuerungssystem 2 kann rein lokal vor Ort vorliegen oder ebenfalls Teile aufweisen, die in der Cloud laufen. Das Steuerungssystem 2 weist eine lokale Sprach-Eingabeeinheit 3 auf. Für diese Sprach-Eingabeeinheit 3 sind in Fig. 1 zwei Varianten 3a, 3b dargestellt. Diese werden im Folgenden noch näher erläutert.

Im Rahmen des vorschlagsgemäßen Verfahrens führt ein Benutzer B eine landwirtschaftliche Tätigkeit, insbesondere mit einer landwirtschaftlichen Arbeitsmaschine 4, in einer landwirtschaftlichen Umgebung durch. Bei der landwirtschaftlichen Arbeitsmaschine 4 kann es sich um einen Traktor, einen Mähdrescher, einen Feldhäcksler oder dergleichen handeln. Bevorzugt handelt es sich um eine selbstfahrende Erntemaschine. Die landwirtschaftliche Tätigkeit kann eine beliebige Tätigkeit sein, wie sie in der Landwirtschaft üblicherweise vorkommt. Es kann sich um einen Erntevorgang handeln, der typischerweise mittels einer landwirtschaftlichen Arbeitsmaschine 4 durchgeführt wird, aber auch um die Fütterung eines Viehbestandes oder die Wartung eines Silos. Die landwirtschaftliche Umgebung betrifft eine abgegrenzte landwirtschaftliche Funktionseinheit, beispielsweise ein Feld, ein Silo, einen Stall oder dergleichen, die sich in örtlicher Nähe zum Benutzer B befindet und auf die sich die landwirtschaftliche Tätigkeit bezieht. Die landwirtschaftliche Umgebung umfasst auch die in realistisch nutzbarer Nähe vorhandenen Ressourcen wie landwirtschaftliche Arbeitsmaschinen 4.

Die landwirtschaftliche Tätigkeit und der Benutzer B und die landwirtschaftliche Umgebung sind in einen landwirtschaftlichen Kontext eingebettet. Bei diesem landwirtschaftlichen Kontext handelt es sich um die reale landwirtschaftliche Situation. Der landwirtschaftliche Kontext umfasst regelmäßig viele landwirtschaftliche Umgebungen, die direkt einem landwirtschaftlichen Betrieb, einer über- oder untergeordneten Wirtschaftseinheit oder einer ähnlichen verbindenden Einheit zugeordnet sind. Der landwirtschaftliche Kontext bestimmt die Handlungsmöglichkeiten des Benutzers B und insbesondere die durch den Benutzer B ausgeführten landwirtschaftlichen Tätigkeiten.

Den landwirtschaftlichen Kontext abbildende Zustandsdaten und/oder Planungsdaten sind in dem landwirtschaftlichen Datenbanksystem 1 hinterlegt. Die Zustandsdaten und Planungsdaten sind also die virtuelle Abbildung des realen landwirtschaftlichen Kontextes. Die Planungsdaten betreffen zukünftig durchzuführende landwirtschaftliche Tätigkeiten wie eine Schlagbearbeitung, eine Bestellung oder die Nutzung von Ressourcen in der landwirtschaftlichen Umgebung, eine Personalplanung oder dergleichen. Die Planungsdaten beziehen sich dabei immer auf den landwirtschaftlichen Kontext im weitesten Sinne. Die Zustandsdaten bilden eine aktuelle Situation im landwirtschaftlichen Kontext, der landwirtschaftlichen Umgebung und/oder einer landwirtschaftlichen Tätigkeit ab. Die Zustandsdaten sind zumindest in einem gewissen Maße aktuell. Es ist also so, dass die Planungsdaten, zumeist ausgehend von den Zustandsdaten, zukünftige Veränderungen der Zustandsdaten abbilden. Entsprechend sind die Zustandsdaten und die Planungsdaten voneinander abhängig, können jedoch auch unabhängig voneinander verändert werden.

Das vorschlagsgemäße Verfahren betrifft nun die Unterstützung des Benutzers B im landwirtschaftlichen Kontext. Dabei ist der Blick vorliegend nicht nur auf die eine landwirtschaftliche Tätigkeit gerichtet, sondern auf mehrere oder gar alle landwirtschaftlichen Tätigkeiten, die in diesem landwirtschaftlichen Kontext anfallen. Deren Organisation kann eine beträchtliche Menge an Zeit in Anspruch nehmen, die für andere Tätigkeiten verloren ist.

Wesentlich ist vorschlagsgemäß nun, dass der Benutzer B während der Durchführung der landwirtschaftlichen Tätigkeit per Spracheingabe über die lokale Sprach-Eingabeeinheit 3 die Zustandsdaten und/oder Planungsdaten bearbeitet, insbesondere ergänzt. Der Begriff "bearbeiten" ist dabei weit zu verstehen und umfasst insbesondere auch ein Anlegen neuer Daten.

Der Benutzer B kann also beispielsweise eine Tagesplanung für den nächsten Tag durch Bearbeitung der Planungsdaten anlegen und dabei Mitarbeiter, landwirtschaftliche Arbeitsmaschinen 4 und anderweitige Ressourcen zuweisen. Weiterhin kann der Benutzer B beispielsweise durch eine Bearbeitung der Zustandsdaten eine Dokumentation der landwirtschaftlichen Tätigkeit durchführen. Damit erhält der Benutzer B die Möglichkeit, diese Planung in seinen Tagesablauf zu integrieren und so Zeit einzusparen.

Aus technischer Perspektive ist es in der bevorzugten Ausgestaltung so, dass der Benutzer B zur Steuerung des landwirtschaftlichen Datenbanksystems 1 als Spracheingabe Sprachbefehle in die Sprach-Eingabeeinheit 3 einspricht. Das landwirtschaftliche Steuerungssystem 2 kann dann auf Basis der Zustandsdaten und/oder Planungsdaten ein an den landwirtschaftlichen Kontext angepasstes Semantikmodell auswählen oder erzeugen. Mit dem Semantikmodell übersetzt das landwirtschaftliche Steuerungssystem 2 die Sprachbefehle in Steuerungsbefehle und mit den Steuerungsbefehlen bearbeitet das landwirtschaftliche Steuerungssystem 2 die Zustandsdaten und/oder Planungsdaten.

Unter einem Semantikmodell wird die Grundlage der Sprachverarbeitung im weiteren Sinne zwischen Aufnahme der Sprachbefehle als Audiodatei oder dergleichen und Übersetzung dieser Sprachbefehle in Steuerungsbefehle verstanden. Das Semantikmodell kann dabei die Verarbeitung der Audiobefehle oder die Übersetzung von erkannten Wörtern in einen technischen Sinngehalt betreffen. Hier und vorzugsweise ist das Semantikmodell so ausgewählt oder erzeugt, dass es für die Zustandsdaten und/oder Planungsdaten und/oder mit den Zustandsdaten und/oder Planungsdaten optimiert ist. Durch diese Verknüpfung zwischen landwirtschaftlichem Kontext und technischer Umsetzung kann eine effiziente, Ressourcen der Datenverarbeitung schonende Umsetzung des Verfahrens erreicht werden.

In einer Variante kann vorgesehen sein, dass das Steuerungssystem 2 aus den Sprachbefehlen mittels Spracherkennung ohne Berücksichtigung des Semantikmodells digitale Sprachbefehle ermittelt, insbesondere also eine übliche Methode der Spracherkennung nutzt und natürliche Sprache als Sprachbefehle erkennt, und die digitalen Sprachbefehle auf Basis des Semantikmodells in die Steuerungsbefehle übersetzt. Beispielsweise kann so eine bereits bestehende Sprachverarbeitung genutzt werden, deren Output an die Bedürfnisse der Landwirtschaft adaptiert wird. Alternativ kann auch vorgesehen sein, dass das Steuerungssystem 2 aus den Sprachbefehlen mittels Spracherkennung unter Berücksichtigung des Semantikmodells die digitalen Sprachbefehle ermittelt und die digitalen Sprachbefehle, insbesondere auf Basis des Semantikmodels, in die Steuerungsbefehle übersetzt.

Die Übersetzung der Sprachbefehle in Steuerungsbefehle kann also allgemein zweischrittig ablaufen. Ein erster Schritt kann die Korrelation aufgenommener Audiodaten mit einem Wörterbuch zur Erkennung von natürlicher Sprache sein. Das Semantikmodell kann dann ein ausgewähltes Wörterbuch sein, das beispielsweise mehr, oder sogar überwiegend, landwirtschaftliche Begriffe enthält. Alternativ oder zusätzlich können auch landwirtschaftliche Begriffe bei der Erkennung höher gewichtet werden. Ein zweiter Schritt kann eine Sinnerkennung sein, bei der aus der erkannten natürlichen Sprache die technischen Steuerungsbefehle abgeleitet werden. Auch hier kann das Semantikmodell zum Einsatz kommen. Dabei kann Wörtern ihre landwirtschaftliche Bedeutung in technischer Hinsicht zugeordnet sein. Genauso ist aber auch denkbar, dass nur ein einzelner Schritt oder mehrere Schritte bei der Übersetzung der Sprachbefehle in Steuerungsbefehle zur Anwendung kommt bzw. kommen.

In der in Fig. 1 gezeigten und insoweit bevorzugten Ausführungsform ist es so, dass der Benutzer B die landwirtschaftliche Tätigkeit mittels einer landwirtschaftlichen Arbeitsmaschine 4 durchführt. Vorzugsweise führt der Benutzer B die landwirtschaftliche Tätigkeit in einer Fahrerkabine 5 der landwirtschaftlichen Arbeitsmaschine 4 durch. Dadurch kann das Verfahren und insbesondere die Sprachverarbeitung direkt auf einen vordefinierten Bezugsrahmen abgestimmt sein.

Im Sinne der vollständigen und effizienten Abbildung des landwirtschaftlichen Kontextes betreffen die Planungsdaten vorzugsweise landwirtschaftliche Ressourcen, weiter vorzugsweise Lagerbestände und/oder landwirtschaftliche Arbeitsmittel, insbesondere landwirtschaftliche Arbeitsmaschinen 4, und/oder landwirtschaftliche Arbeitskräfte und/oder landwirtschaftliche Schläge. Die Planungsdaten können Arbeitsaufträge und/oder Bestellungen umfassen. Bevorzugt ist vorgesehen, dass der Benutzer B Arbeitsaufträge und/oder Bestellungen bearbeitet, insbesondere anlegt oder verändert. So wird es dem Benutzer B insbesondere ermöglicht, weitere Tagesplanungen während der Durchführung einer aktuellen Tagesplanung vorzunehmen.

Bezüglich der Zustandsdaten wird bevorzugt, dass die Zustandsdaten Zustände der landwirtschaftlichen Ressourcen und/oder Fortschritte von Planungen der Planungsdaten betreffen. Zusätzlich oder alternativ können die Zustandsdaten Dokumentationen, insbesondere für Fortschritte der Abarbeitung einer Planung der Planungsdaten oder Änderungen der Zustandsdaten umfassen. Vorzugsweise ist vorgesehen, dass der Benutzer B Dokumentationen bearbeitet, insbesondere verändert.

Im Folgenden werden weitere technische Möglichkeiten der Entlastung des Benutzers vorgeschlagen, die synergetisch mit dem vorschlagsgemäßen Verfahren zusammenwirken und den Benutzer B weiter entlasten können.

Wie in Fig. 1 gezeigt, erhebt das Steuerungssystem 2 automatisch die landwirtschaftliche Umgebung betreffende Messdaten und übernimmt die Messdaten als Zustandsdaten in das landwirtschaftliche Datenbanksystem 1. Dafür sind hier und vorzugsweise ein oder mehrere Sensoren 6, insbesondere auf der landwirtschaftlichen Arbeitsmaschine 4, vorgesehen. Es kann nun so sein, dass das Steuerungssystem 2 das Semantikmodell auf Basis der Messdaten auswählt oder erzeugt. Besonders bevorzugt ist es also so, dass die Messdaten GPS-Daten eines Smartphones 7 und/oder GPS-Daten der landwirtschaftlichen Arbeitsmaschine 4 und/oder die landwirtschaftliche Tätigkeit betreffende Zustandsdaten der landwirtschaftlichen Arbeitsmaschine 4 umfassen.

Weiterhin können die Messdaten auch Daten einer, insbesondere Bluetooth-, Umgebungserkennung, vorzugsweise des Smartphones 7 oder der landwirtschaftlichen Arbeitsmaschine 4, umfassen. Damit können Daten zu in der Umgebung vorhandenen, mit Bluetooth ausgestatteten, Ressourcen ermittelt werden. Es kann vorgesehen sein, dass das Steuerungssystem 2 aus den Messdaten die Position des Benutzers B bestimmt und das Semantikmodell entsprechend positionsabhängig auswählt oder erzeugt. Beispielsweise kann ein Benutzer B, der sich auf einem bestimmten Schlag befindet, eine Dokumentation eines vorhergehend zu diesem Schlag geplanten Arbeitsvorgangs im Ergebnis fast vollautomatisch durchführen. Das Steuerungssystem 2 kann die Position des Benutzer B ermitteln, automatisch die genutzte landwirtschaftliche Arbeitsmaschine 4 erkennen und mit dem Datenbanksystem 1 abgleichen, aus den Sensoren 6 der landwirtschaftlichen Arbeitsmaschine relevante Bearbeitungsparameter ableiten und mittels einer Spracheingabe des Benutzers B eine Dokumentation finalisieren.

Es darf an dieser Stelle angemerkt werden, dass das Erzeugen des Semantikmodells auch Parametrierungen anderer Semantikmodelle oder kleinere Änderungen eines Semantikmodells umfasst. Es ist also nicht notwendig, das Semantikmodell von Grund auf zu erzeugen.

Grundsätzlich ist denkbar, dass das Semantikmodell während des Verfahrens angepasst wird oder ein anderes Semantikmodell während des Verfahrens ausgewählt oder erzeugt wird.

Es kann auch vorgesehen sein, dass mehrere Semantikmodelle zum Einsatz kommen. Aufgrund ihrer abstrakten Natur sind die Semantikmodelle vorliegend nicht in Fig. 1 dargestellt.

Um viele Anwendungsszenarien abzudecken, sollte das Steuerungssystem 2 flexibel auf den Benutzer B reagieren können. Daher ist es vorzugsweise so, dass das Steuerungssystem 2 eine erste Spracheingabe des Benutzers B mit einem ersten Semantikmodell in Steuerungsbefehle übersetzt, dass das Steuerungssystem 2 auf Basis der Steuerungsbefehle der ersten Spracheingabe ein zweites Semantikmodell auswählt oder erzeugt und weitere Spracheingaben des Benutzers B mit dem zweiten Semantikmodel in Steuerungsbefehle übersetzt.

Insbesondere kann dabei das erste Semantikmodell ein gemeines Semantikmodell sein, das erst einmal erkennt, ob der Benutzer B beispielsweise eine Dokumentation oder eine Planung durchführen möchte und das zweite Semantikmodell kann dann an diese Tätigkeit angepasst sein. Beispielsweise können bei einer Dokumentation diverse Messdaten aus der landwirtschaftlichen Umgebung bei der Auswahl oder dem Erzeugen des zweiten Semantikmodells berücksichtigt werden und/oder als Teil der Dokumentation als Zustandsdaten in das landwirtschaftliche Datenbanksystem 1 übernommen werden. Bei einer Planung könnte hingegen ein von der landwirtschaftlichen Umgebung unabhängiges Semantikmodell genutzt werden.

Dafür kann im Einzelnen vorgesehen sein, dass das Steuerungssystem 2 mit den ersten Steuerungsbefehlen zwischen einer Bearbeitung der Zustandsdaten und der Planungsdaten unterscheidet und abhängig von dieser Unterscheidung das zweite Semantikmodell auswählt und vorzugsweise dass das Steuerungssystem 2 bei einer Bearbeitung der Zustandsdaten das zweite Semantikmodell auf Basis der Messdaten auswählt oder erzeugt.

Hier und vorzugsweise ist es so, dass das Steuerungssystem 2 aus den Zustandsdaten und/oder Planungsdaten und/oder vergangenen Bearbeitungen der Zustandsdaten und/oder Planungsdaten mögliche und/oder voraussichtliche Bearbeitungen der Zustandsdaten und/oder Planungsdaten ermittelt und das Semantikmodell, insbesondere das erste oder das zweite Semantikmodell, auf Basis der möglichen und/oder voraussichtlichen Bearbeitungen auswählt oder erzeugt. Dies trägt dem Umstand Rechnung, dass in einem landwirtschaftlichen Kontext meist nur wenige Dokumentationen offen und nur wenige Planungen sinnvoll sind oder voraussichtlich durchgeführt werden. Ganz grundsätzlich kann die Auswahl des Semantikmodells auch abhängig von der Jahreszeit sein. Beispielsweise wird ein Benutzer B im Frühjahr eher eine Aussaat als eine Ernte planen. Entsprechend ändern sich die voraussichtlich vom Benutzer B verwendeten Begriffe.

Zur Vereinfachung der Spracheingabe und gegebenenfalls des Semantikmodells kann vorgesehen sein, dass die Zustandsdaten und/oder Planungsdaten Formulare mit einer fest vorgegebenen Struktur umfassen und dass der Benutzer B während der Durchführung der landwirtschaftlichen Tätigkeit per Spracheingabe über die lokale Sprach-Eingabeeinheit 3 die Formulare bearbeitet, insbesondere neue Formulare ausfüllt. Vorzugsweise wird das landwirtschaftliche Steuerungssystem 2 das Semantikmodell, insbesondere das zweite Semantikmodell, auf Basis der fest vorgegebenen Struktur auswählen oder erzeugen. Dies trägt weiter zur Entlastung des Benutzers B und zur Vereinfachung der Datenverarbeitung bei. Insbesondere kann auch vorgesehen sein, dass die fest vorgegebene Struktur teilweise automatisch ausgefüllt wird. Dabei können die Messdaten und/oder Stammdaten des Benutzers B und/oder der landwirtschaftlichen Umgebung und/oder des landwirtschaftlichen Kontext zum Einsatz kommen.

Hier und vorzugsweise ist die Sprach-Eingabeeinheit 3 ein Smartphone 7 oder Teil der landwirtschaftlichen Arbeitsmaschine 4. Zusätzlich oder alternativ kann das Steuerungssystem 2 eine Ausgabeeinheit 8 aufweisen. Die Ausgabeeinheit 8 kann das Smartphone 7 oder Teil der landwirtschaftlichen Arbeitsmaschine 4 sein. Hier und vorzugsweise ist, wie in der rechten Vergrößerung in Fig. 1 gezeigt, die Sprach-Eingabeeinheit 3 das Smartphone 7 und die Ausgabeeinheit 8 ein Terminal 9 der landwirtschaftlichen Arbeitsmaschine 4. Diese Variante ist mit Hinblick auf die Realität eines landwirtschaftlichen Benutzers B besonders interessant. Ein Smartphone 7 enthält häufig Rechenkapazitäten und möglicherweise an den Benutzer B angepasste Sprachverarbeitungsmöglichkeiten. Eine Ausgabe über den Bildschirm des Smartphones 7 ist während der Steuerung einer landwirtschaftlichen Arbeitsmaschine 4 allerdings potentiell gefährlich. Die vorgeschlagene Kombination von Smartphone 7 und landwirtschaftlicher Arbeitsmaschine 4 löst dieses Problem. Weiterhin kann dann vorgesehen sein, dass die landwirtschaftliche Arbeitsmaschine 4 keine Sprach-Eingabeeinheit 3 aufweist, wodurch Kosten gespart werden können.

Es kann vorgesehen sein, dass das Steuerungssystem 2 mittels der Ausgabeeinheit 8 einen Dialog mit dem Benutzer B durchführt. Vorzugsweise stellt das Steuerungssystem 2 bei uneindeutigen und/oder lückenhaften und/oder fehlerhaften Eingaben mittels der Ausgabeeinheit 8 dem Benutzer (B) Fragen zur Beseitigung der Uneindeutigkeit und/oder Fehler und/oder Lücken. Der Benutzer B beantwortet die Fragen, hier und vorzugsweise mittels der Sprach-Ein-gabeeinheit 3. Das Steuerungssystem 2 erzeugt so weitere Steuerungsbefehle. Das Steuerungssystem 2 kann dabei auch eine Rückmeldung an den Benutzer B geben, wenn eine Bearbeitung, insbesondere der Planungsdaten, nicht möglich oder nicht sinnvoll ist, beispielsweise weil eingeplantes Personal krankgemeldet ist, das Wetter nicht zur Planung passt, Ressourcen nicht vorhanden sind oder dergleichen.

Das Steuerungssystem 2 kann eine Dokumentationsroutine der Nutzung des Benutzers B durchführen, und insbesondere anonymisierte und/oder abstrahierte Nutzungsdaten erzeugen. Dadurch können Statistiken und/oder Abrechnungen und/oder eine Nutzungshistorie erzeugt werden.

Nach einer weiteren Lehre, der eigenständige Bedeutung zukommt, wird eine Sprach-Eingabeeinheit 3, eingerichtet zur Verwendung in dem vorschlagsgemäßen Verfahren vorgeschlagen. Diese Sprach-Eingabeeinheit 3 ist insbesondere ein Smartphone 7. Wesentlich bei dieser weiteren Lehre ist, dass die Steuerungsbefehle von der Sprach-Eingabeeinheit 3 an einen in der Cloud befindlichen Teil des Steuerungssystems 2 im Übrigen übermittelt werden, vorzugsweise, dass die Sprachbefehle mit dem Semantikmodell in einer lokalen Hardware der Sprach-Eingabeeinheit 3 in die Steuerungsbefehle übersetzt werden. Grundsätzlich können jedoch alle Verarbeitungsschritte des Verfahrens unabhängig von der jeweiligen Hardware an beliebigen Orten durchgeführt werden. Auf alle Ausführungen zu dem vorschlagsgemäßen Verfahren darf verwiesen werden.

Nach einer weiteren Lehre, der ebenfalls eigenständige Bedeutung zukommt, wird eine landwirtschaftliche Arbeitsmaschine 4 mit einer Ausgabeeinheit 8 und vorzugsweise einer Sprach-Eingabeeinheit 3, eingerichtet zur Verwendung im vorschlagsgemäßen Verfahren vorgeschlagen. Wesentlich dabei ist, dass die landwirtschaftliche Arbeitsmaschine 4 eingerichtet ist, mittels der Ausgabeeinheit 8 den Dialog mit dem Benutzer B durchzuführen. Auf alle Ausführungen zu dem vorschlagsgemäßen Verfahren darf verwiesen werden.

Nach einer weiteren Lehre, der eigenständige Bedeutung zukommt, wird ein Computerprogrammprodukt, insbesondere eine App, umfassend Steuerbefehle, die bei Ausführung durch ein Smartphone 7 das Smartphone 7 zur Verwendung als vorschlagsgemäße Sprach-Eingabeeinheit 3 einrichten, vorgeschlagen. Auf alle Ausführungen zu der vorschlagsgemäßen Sprach-Eingabeeinheit 3 darf verwiesen werden.

Nach einer weiteren Lehre, der eigenständige Bedeutung zukommt, wird ein Steuerungssystem 2 zur Steuerung eines cloudbasierten landwirtschaftlichen Datenbanksystems 1, eingerichtet zur Verwendung in einem vorschlagsgemäßen Verfahren, vorgeschlagen. Bei diesem Steuerungssystem 2 ist es hier und vorzugsweise so, dass das Steuerungssystem 2 eine lokale Sprach-Eingabeeinheit 3 aufweist, dass das Steuerungssystem 2 eingerichtet ist, einen Benutzer B, der eine landwirtschaftliche Tätigkeit in einer landwirtschaftlichen Umgebung durchführt, zu unterstützen, dass die landwirtschaftliche Tätigkeit und der Benutzer B und die landwirtschaftliche Umgebung in einen landwirtschaftlichen Kontext eingebettet sind, dass den landwirtschaftlichen Kontext abbildende Zustandsdaten und/oder Planungsdaten in dem landwirtschaftlichen Datenbanksystem 1 hinterlegt sind, dass das Steuerungssystem 2 dazu eingerichtet ist, zu ermöglichen, dass der Benutzer B währen der Durchführung der landwirtschaftlichen Tätigkeit per Spracheingabe über die lokale Sprach-Ein-gabeeinheit 3 die Zustandsdaten und/oder Planungsdaten bearbeitet, insbesondere ergänzt. Vorzugsweise ist das Steuerungssystem 2 dabei teilweise cloudbasiert. Der cloudbasierte Teil kommuniziert dann direkt oder indirekt mit der Sprach-Eingabeeinheit 3. Auf alle Ausführungen zu dem vorschlagsgemäßen Verfahren darf verwiesen werden.

Nach einer weiteren Lehre, der eigenständige Bedeutung zukommt, wird ein landwirtschaftliches Datenbanksystem 1 eingerichtet zur Verwendung in einem vorschlagsgemäßen Verfahren beansprucht. Das landwirtschaftliche Datenbanksystem 1 ist eingerichtet, von einem vorschlagsgemäßen Steuerungssystem 2 gesteuert zu werden, wobei den landwirtschaftlichen Kontext abbildende Zustandsdaten und/oder Planungsdaten in dem landwirtschaftlichen Datenbanksystem 1 hinterlegt sind, wobei das landwirtschaftliche Datenbanksystem 1 eingerichtet ist, das die Zustandsdaten und/oder Planungsdaten mittels des Steuerungssystems 2 bearbeitet, insbesondere ergänzt, werden können. Auf alle Ausführungen zu dem vorschlagsgemäßen Verfahren und dem vorschlagsgemäßen Steuerungssystem 2 darf verwiesen werden.

### Bezugszeichenliste

- 1: landwirtschaftliches Datenbanksystem
- 2: Steuerungssystem
- 3: Sprach-Eingabeeinheit
- 3a: Sprach-Eingabeeinheit
- 3b: Sprach-Eingabeeinheit
- 4: landwirtschaftliche Arbeitsmaschine
- 5: Fahrerkabine
- 6: Sensor
- 7: Smartphone
- 8: Ausgabeeinheit
- 9: Terminal
- B: Benutzer

## Patentansprüche

1. Verfahren zur Steuerung eines cloudbasierten landwirtschaftlichen Datenbanksystems (1) mittels eines Steuerungssystems (2),
wobei das Steuerungssystem (2) eine lokale Sprach-Eingabeeinheit (3) aufweist,
wobei ein Benutzer (B) eine landwirtschaftliche Tätigkeit, insbesondere mit einer landwirtschaftlichen Arbeitsmaschine (4), in einer landwirtschaftlichen Umgebung durchführt, wobei die landwirtschaftliche Tätigkeit und der Benutzer (B) und die landwirtschaftliche Umgebung in einen landwirtschaftlichen Kontext eingebettet sind,
wobei den landwirtschaftlichen Kontext abbildende Zustandsdaten und/oder Planungsdaten in dem landwirtschaftlichen Datenbanksystem (1) hinterlegt sind,
**dadurch gekennzeichnet,**
**dass** der Benutzer (B) während der Durchführung der landwirtschaftlichen Tätigkeit per Spracheingabe über die lokale Sprach-Eingabeeinheit (3) die Zustandsdaten und/oder Planungsdaten bearbeitet, insbesondere ergänzt.

2. Verfahren nach Anspruch 1, **dadurch gekennzeichnet, dass** der Benutzer (B) zur Steuerung des landwirtschaftlichen Datenbanksystems (1) als Spracheingabe Sprachbefehle in die Sprach-Eingabeeinheit (3) einspricht, dass das landwirtschaftliche Steuerungssystem (2) auf Basis der Zustandsdaten und/oder Planungsdaten ein an den landwirtschaftlichen Kontext angepasstes Semantikmodell auswählt oder erzeugt und dass das landwirtschaftliche Steuerungssystem (2) mit dem Semantikmodell die Sprachbefehle in Steuerungsbefehle übersetzt und mit den Steuerungsbefehlen die Zustandsdaten und/oder Planungsdaten bearbeitet.

3. Verfahren nach Anspruch 1 oder 2, **dadurch gekennzeichnet, dass** der Benutzer (B) die landwirtschaftliche Tätigkeit mittels einer landwirtschaftlichen Arbeitsmaschine (4) durchführt, vorzugsweise, dass der Benutzer (B) die landwirtschaftliche Tätigkeit in einer Fahrerkabine (5) der landwirtschaftlichen Arbeitsmaschine (4) durchführt.

4. Verfahren nach einem der vorhergehenden Ansprüche, **dadurch gekennzeichnet, dass** die Planungsdaten landwirtschaftliche Ressourcen, vorzugsweise Lagerbestände und/oder landwirtschaftliche Arbeitsmittel, insbesondere landwirtschaftliche Arbeitsmaschinen (4), und/oder landwirtschaftliche Arbeitskräfte und/oder landwirtschaftliche Schläge, betreffen, und/oder, dass die Planungsdaten Arbeitsaufträge und/oder Bestellungen umfassen, weiter vorzugsweise, dass der Benutzer (B) Arbeitsaufträge und/oder Bestellungen bearbeitet, insbesondere anlegt oder verändert.

5. Verfahren nach einem der vorhergehenden Ansprüche, **dadurch gekennzeichnet, dass** die Zustandsdaten Zustände der landwirtschaftlichen Ressourcen und/oder Fortschritte von Planungen der Planungsdaten betreffen, und/oder, dass die Zustandsdaten Dokumentationen, insbesondere für Fortschritte der Abarbeitung einer Planung der Planungsdaten oder Änderungen der Zustandsdaten, umfassen, vorzugsweise, dass der Benutzer (B) Dokumentationen bearbeitet, insbesondere verändert.

6. Verfahren nach einem der vorhergehenden Ansprüche, **dadurch gekennzeichnet, dass** das Steuerungssystem (2) automatisch die landwirtschaftliche Umgebung betreffende Messdaten erhebt und als Zustandsdaten in das landwirtschaftliche Datenbanksystem (1) übernimmt, vorzugsweise, dass das Steuerungssystem (2) das Semantikmodell auf Basis der Messdaten auswählt oder erzeugt, weiter vorzugsweise, dass die Messdaten GPS-Daten eines Smartphones (7) und/oder GPS-Daten der landwirtschaftlichen Arbeitsmaschine (4) und/oder die landwirtschaftliche Tätigkeit betreffende Zustandsdaten der landwirtschaftlichen Arbeitsmaschine (4) umfassen.

7. Verfahren nach Anspruch 2 und ggf. einem der Ansprüche 3 bis 6, **dadurch gekennzeichnet, dass** das Steuerungssystem (2) aus den Zustandsdaten und/oder Planungsdaten und/oder vergangenen Bearbeitungen mögliche und/oder voraussichtliche Bearbeitungen der Zustandsdaten und/oder Planungsdaten ermittelt und das Semantikmodell auf Basis der möglichen und/oder voraussichtlichen Bearbeitungen auswählt oder erzeugt.

8. Verfahren nach einem der vorhergehenden Ansprüche, **dadurch gekennzeichnet, dass** die Zustandsdaten und/oder Planungsdaten Formulare mit einer fest vorgegebenen Struktur umfassen und dass der Benutzer (B) während der Durchführung der landwirtschaftlichen Tätigkeit per Spracheingabe über die lokale Sprach-Eingabeeinheit (3) die Formulare bearbeitet, insbesondere neue Formulare ausfüllt, vorzugsweise, dass das landwirtschaftliche Steuerungssystem (2) das Semantikmodell auf Basis der fest vorgegebenen Struktur auswählt oder erzeugt.

9. Verfahren nach einem der vorhergehenden Ansprüche, **dadurch gekennzeichnet, dass** die Sprach-Eingabeeinheit (3) ein Smartphone (7) oder Teil der landwirtschaftlichen Arbeitsmaschine (4) ist, und/oder, dass das Steuerungssystem (2) eine Ausgabeeinheit (8) aufweist, dass die Ausgabeeinheit (8) ein Smartphone (7) oder Teil der landwirtschaftlichen Arbeitsmaschine (4) ist, vorzugsweise, dass die Sprach-Eingabeeinheit (3) das Smartphone (7) und die Ausgabeeinheit (8) ein Terminal (9) der landwirtschaftlichen Arbeitsmaschine (4) ist.

10. Verfahren nach Anspruch 9, **dadurch gekennzeichnet, dass** das Steuerungssystem (2) mittels der Ausgabeeinheit (8) einen Dialog mit dem Benutzer (B) durchführt, vorzugsweise, dass das Steuerungssystem (2) bei uneindeutigen und/oder lückenhaften und/oder fehlerhaften Eingaben mittels der Ausgabeeinheit (8) dem Benutzer (B) Fragen zur Beseitigung der Uneindeutigkeit und/oder Fehler und/oder Lücken stellt und der Benutzer (B) die Fragen, insbesondere mittels der Sprach-Eingabeeinheit (3), beantwortet und das Steuerungssystem (2) so weitere Steuerungsbefehle erzeugt.

11. Sprach-Eingabeeinheit, insbesondere Smartphone (7), eingerichtet zur Verwendung in einem Verfahren nach Anspruch 2 und ggf. einem der Ansprüche 3 bis 10, **dadurch gekennzeichnet, dass** die Steuerungsbefehle von der Sprach-Eingabeeinheit (3) an einen in der Cloud befindlichen Teil des Steuerungssystems (2) im Übrigen übermittelt werden, vorzugsweise, dass die Sprachbefehle mit dem Semantikmodell in einer lokalen Hardware der Sprach-Eingabeeinheit (3) in die Steuerungsbefehle übersetzt werden.

12. Landwirtschaftliche Arbeitsmaschine mit einer Ausgabeeinheit (8), und vorzugsweise einer Sprach-Eingabeeinheit (3), eingerichtet zur Verwendung in dem Verfahren nach Anspruch 10.

13. Computerprogrammprodukt, insbesondere App, umfassend Steuerbefehle, die bei Ausführung durch ein Smartphone (7) das Smartphone (7) zur Verwendung als Sprach-Eingabeeinheit (3) nach Anspruch 12 einrichten.

14. Steuerungssystem zur Steuerung eines cloudbasierten landwirtschaftlichen Datenbanksystems (1), eingerichtet zur Verwendung in einem Verfahren nach einem der Ansprüche 1 bis 10.

15. Landwirtschaftliches Datenbanksystem eingerichtet zur Verwendung in einem Verfahren nach einem der Ansprüche 1 bis 10, wobei das landwirtschaftliche Datenbanksystem (1) eingerichtet ist, von einem Steuerungssystem (2) nach Anspruch 14 gesteuert zu werden, wobei den landwirtschaftlichen Kontext abbildende Zustandsdaten und/oder Planungsdaten in dem landwirtschaftlichen Datenbanksystem (1) hinterlegt sind, wobei das landwirtschaftliche Datenbanksystem (1) so eingerichtet ist, dass die Zustandsdaten und/oder Planungsdaten mittels des Steuerungssystems (2) bearbeitet, insbesondere ergänzt, werden können.
